# EUROPÄISCHE PATENTANMELDUNG

(11) **EP 3 006 904 A1**
(43) Veröffentlichungstag der Anmeldung: **13.04.2016**
(21) Anmeldenummer: 15002871.0
(22) Anmeldetag: 07.10.2015
(51) Int. Cl.: G01F 11/00, G01F 11/16, G01F 11/26, A47J 47/01

(54) **BEHÄLTER ZUR BEFÜLLUNG MIT UND ZUR PORTIONSWEISEN ABGABE VON EINER FLÜSSIGKEIT**

(30) Priorität: 07.10.2014 DE 202014008079 U
(71) Anmelder: Boecker, Ulrich, 48429 Rheine (DE); Fark, Dietmar, 48432 Rheine (DE)
(72) Erfinder: Boecker, Ulrich, 48429 Rheine (DE); Fark, Dietmar, 48432 Rheine (DE)
(74) Vertreter: Mahler, Peter

(57) **Zusammenfassung**

Die Erfindung betrifft einen Behälter zur portionsweisen Abgabe von einer Flüssigkeit. Ihr liegt die Aufgabe zugrunde, einen Behälter zur dosierten Abgabe von Flüssigkeiten zu schaffen, der eine genaue Dosierung ermöglicht. Die erfindungsgemäße Aufgabe wird gelöst durch einen Behälter 17 zur portionsweisen Abgabe von einer Flüssigkeit, die ein Reservoir 23 und eine Dosiereinheit 12, 13 umfasst, wobei die Dosiereinheit eine Dosierkammer 22 mit Öffnungen 9 aufweist. Die erfindungsgemäße Vorrichtung ist dadurch gekennzeichnet, dass die Dosierkammer 22 verschiebbar zwischen einer ersten und einer zweiten Position in einer Wand des Reservoirs 23 angeordnet ist, wobei in der ersten Position die Dosierkammer 22 über die Öffnungen 9 in Flüssigkeitskommunikation mit dem Reservoir 23 steht und in der zweiten Position die Dosierkammer 22 über die Öffnungen 9 in Flüssigkeitskommunikation mit der Umgebung steht und die Öffnungen 9 auf dem Verschiebeweg zwischen der ersten und der zweiten Position in zumindest einem Abschnitt 24 vollständig verschlossen sind.

## Beschreibung

Die vorliegende Erfindung betrifft einen Behälter zur Befüllung mit und zur portionsweisen Abgabe von einer Flüssigkeit, beispielsweise von Milch oder Medikamenten.

Die dosierte Abgabe von Flüssigkeiten findet viele Anwendungen, beispielsweise bei der Dosierung von flüssigen Medikamenten oder in der Küche. Dabei werden Messbecher oder andere Maßeinheiten wie Teelöffel, Esslöffel u.s.w. verwendet, die mehr oder weniger genau sind und nach Gebrauch gereinigt werden müssen. Außerdem muss der angebrochene Behälter, aus dem ein Teilinhalt entnommen wurde, verschlossen und geeignet verwahrt werden, damit der Inhalt nicht schlecht wird.

Eine genaue und reproduzierbare Dosierung ist mit Maßeinheiten wie Esslöffeln auch nicht möglich.

Auch in industriellen Anwendungen besteht ein Bedarf nach dosierter Abgabe z.B. von Ölen, um die erforderliche Menge genau zu dosieren und nicht aus falschem Sicherheitsbewusstsein übermäßige Mengen zu verschwenden.

Der Erfindung liegt deshalb die Aufgabe zugrunde, einen Behälter zur dosierten Abgabe von Flüssigkeiten zu schaffen, der eine genaue und reproduzierbare Dosierung ermöglicht und bei dem das Dosiervolumen vorzugsweise einstellbar ist.

Die erfindungsgemäße Aufgabe wird gelöst durch einen Behälter zur Befüllung mit und zur portionsweisen Abgabe von einer Flüssigkeit, die ein Reservoir und eine Dosiereinheit umfasst, wobei die Dosiereinheit eine Dosierkammer mit Öffnungen aufweist. Die erfindungsgemäße Vorrichtung ist dadurch gekennzeichnet, dass die Dosierkammer verschiebbar zwischen einer ersten und einer zweiten Position in einer Wand des Reservoirs angeordnet ist, wobei in der ersten Position die Dosierkammer über die Öffnungen in Flüssigkeitskommunikation mit dem Reservoir steht und in der zweiten Position die Dosierkammer über die Öffnungen in Flüssigkeitskommunikation mit der Umgebung steht und die Öffnungen auf dem Verschiebeweg zwischen der ersten und der zweiten Position in zumindest einem Abschnitt vollständig verschlossen sind.

Mit dem erfindungsgemäßen Behälter ist es möglich, eine vorgegebene Menge einer Flüssigkeit aus dem Behälter abzugeben. Hierfür ist eine Dosiereinheit mit einer Dosierkammer in einer Wand des Reservoirs, vorzugsweise im Boden des Reservoirs angeordnet. Die Dosierkammer weist ein bestimmtes Volumen auf, das dem Volumen der abgegebenen Flüssigkeitsmenge entspricht. Die Dosierkammer verfügt über Öffnungen und befindet sich in ihrer Ausgangslage in einer ersten Position, in der die Öffnungen sich innerhalb des Reservoirs befinden, die Kammer also in Flüssigkeitskommunikation mit dem Reservoir steht.

Die Kammer ist verschiebbar in eine zweite Position, in der sich die Öffnungen außerhalb des Reservoirs befinden, die Kammer also in Flüssigkeitskommunikation mit der Umgebung steht. Das in der Kammer befindliche Flüssigkeitsvolumen kann dadurch aus der Kammer ausfließen. Auf dem Verschiebeweg zwischen der ersten und der zweiten Position sind die Öffnungen zumindest in einem Abschnitt des Wegs vollständig verschlossen, so dass keine Kommuniaktion zwischen dem Reservoir des Behälters und der Umgebung hergestellt wird.

Kehrt die Dosierkammer nach der Entleerung in die Ausgangslage zurück, so füllt sie sich über die Öffnungen wieder mit der Flüssigkeit, die durch Verschieben der Dosierkammer erneut definiert abgegeben werden kann.

Die vollständige Schließung der Öffnungen der Dosierkammer auf dem Verschiebeweg kann insbesondere dadurch erreicht werden, dass die Wandstärke des Reservoirs größer als die Höhe der Öffnungen ist, so dass die Öffnungen beim Durchqueren der Wand vollständig geschlossen werden. Die Dosiereinheit kann auch über eine Art Hülse verfügen, in der die Dosierkammer verschiebbar ist, und die eine Höhe aufweist, die ausreicht, um die Öffnungen der Dosierkammer vollständig zu verschießen.

Die Öffnungen der Dosierkammer können insbesondere rund, oval oder schlitzförmig sein.

Vorzugsweise kann die Dosierkammer durch Federkraft in der ersten Position gehalten werden. Sie kann dann durch Druck auf eine entsprechend vorgesehene Betätigungsvorrichtung, insbesondere einen Druckknopf, entgegen der Federkraft in die zweite Position bewegt werden, wobei eine dosierte Flüssigkeitsmenge abgegeben wird, und kehrt anschließend wieder in die Ausgangsstellung zurück.

In einer vorteilhaften Gestaltung des erfindungsgemäßen Behälters kann die Größe der Dosierkammer einstellbar sein. Dies kann insbesondere durch einen in der Höhe verstellbaren Stempel geschehen. Der Stempel kann den oberen Abschluss der Dosierkammer oder einen Teil davon bilden und bespielsweise durch ein Gewinde in der Höhe verstellbar sein. Je nach Position verbleibt in der Dosierkammer ein kleineres oder ein größeres Volumen. Die pro Dosiervorgang abgegebene Flüssigkeitsmenge ist damit einstellbar.

Vorteilhaft kann der Stempel über ein Gewinde mit einer Betätigungseinrichtung verbunden sein, beispielsweise mit einem Drehknopf. Durch Drehen des Drehkopfes wird das Gewinde heraus- oder hereingedreht und der Stempel damit angehoben und abgesenkt und entsprechend das Volumen der Dosierkammer vergrößert oder verkleinert.

Der Behälter kann vorteilhaft aus wärmedämmendem Material bestehen, insbesondere an seinen Außenwänden. So kann beispielsweise kalte oder warme Milch in den Behälter gefüllt und dort längere Zeit aufbewahrt werden. Durch die geringe Durchmischung der Flüssigkeit im Behälterinneren bei der Abgabe wird die Flüssigkeit lange auf der Ausgangstemperatur gehalten.

Die Erfindung wird im Folgenden anhand der beigefügten Abbildungen näher erläutert, die darstellen:
- Fig. 1: zeigt einen erfindungsgemäßen Behälter in perspektivischer Darstellung;
- Fig. 2: zeigt den Behälter aus Fig. 1 im Längsschnitt;
- Fig. 3: zeigt den Boden des Behälters aus den Figuren 1 und 2 in verschiedenen perspektivischen und Schnittdarstellungen;
- Fig. 4: zeigt den Stempel des Behälters aus den Figuren 1 und 2 in verschiedenen perspektivischen und Schnittdarstellungen;
- Fig. 5: zeigt den Knopf des Behälters aus den Figuren 1 und 2 in verschiedenen perspektivischen und Schnittdarstellungen;
- Fig. 6: zeigt den Deckel des Behälters aus den Figuren 1 und 2 in verschiedenen perspektivischen und Schnittdarstellungen;
- Fig. 7: zeigt den Zwischenboden des Behälters aus den Figuren 1 und 2 in verschiedenen perspektivischen und Schnittdarstellungen;
- Fig. 8: zeigt die Hülse des Behälters aus den Figuren 1 und 2 in verschiedenen perspektivischen und Schnittdarstellungen;
- Fig. 9: zeigt das Gehäuse des Behälters aus den Figuren 1 und 2 in verschiedenen perspektivischen und Schnittdarstellungen.

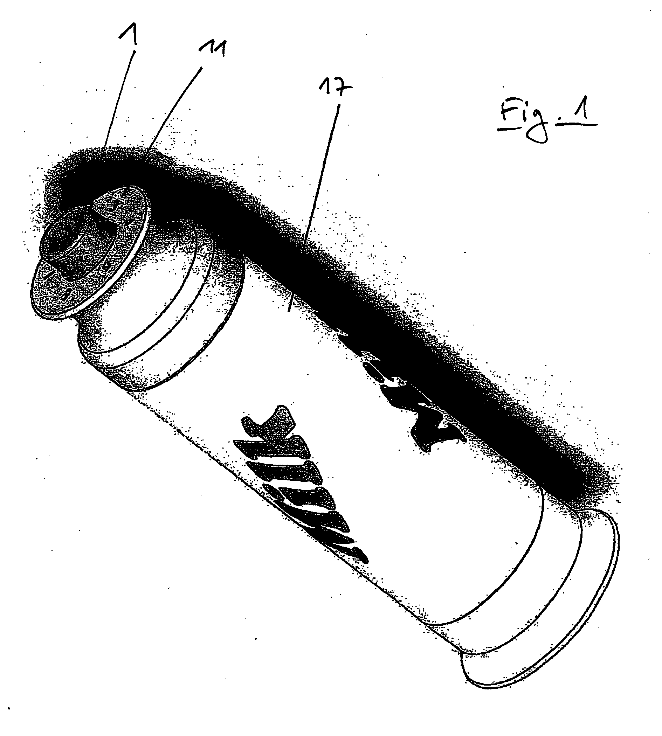

Figur 1 zeigt einen erfindungsgemäßen Behälter 17 in perspektivischer Darstellung. Der Behälter kann beispielsweise als Milchspender eingesetzt werden, der eine dosierte Abgabe von Milch ermöglicht. Er kann aber auch zur Dosierung jeder anderen Flüssigkeit, wie beispielsweise von Saucen, Wasser, Sirup, Öl oder Medikamenten eingesetzt werden. Der Behälter kann auch, insbesondere mit ensprechender Wandhalterung, als Seifenspender oder im industriellen Bereich zur Abgabe von Chemikalien eingesetzt werden.

Eine voreingestellte Menge der im Behälter enthaltenen Flüssigkeit kann durch Drücken auf den Druckknopf 1 abgegeben werden. Die Dosis ist dabei durch Drehen des Druckknopfes 1 einstellbar. Die Oberseite des Deckels weist dabei eine Skala 11 auf, die Hinweise auf die Größe der abgegebenen Dosis der Flüssigkeit liefert.

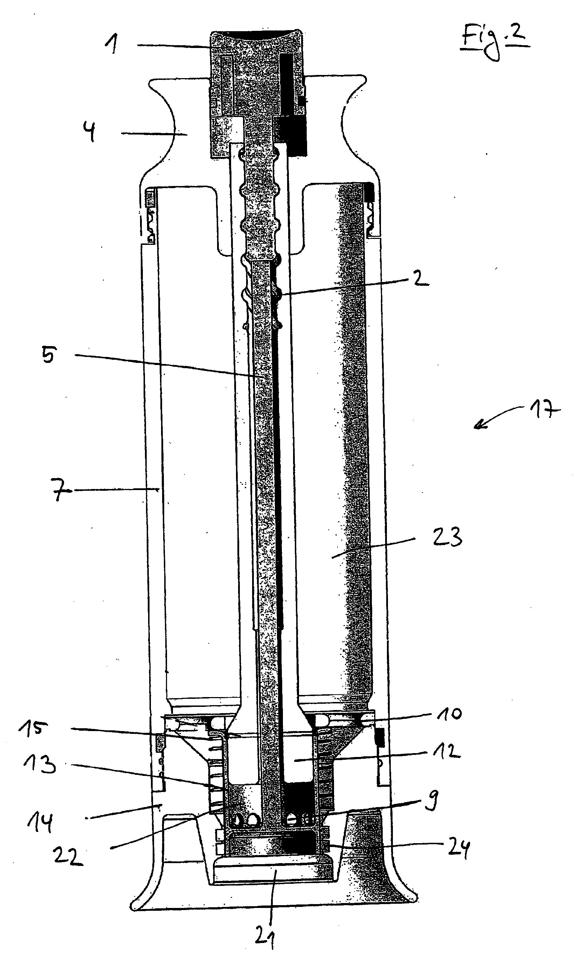

Figur 2 zeigt den Behälter aus Figur 1 im Längsschnitt. Zu sehen ist, dass der Behälter 17 aus einem Gehäuse 7 besteht, das nach oben mit dem Deckel 4 und nach unten mit dem Boden 14 abgeschlossen ist. Im Boden 14 befindet sich ein Durchbruch 21, in dem sich eine verschiebbare Hülse 13 befindet, die gegen die Kraft einer Druckfeder 15 nach unten verschiebbar ist. Die Hülse 13 ist nach unten geschlossen und weist im unteren Bereich ihrer Seitenwand Öffnungen 9 auf. Nach oben ist die Hülse 13 durch einen Stempel 12 begrenzt, so dass innerhalb der Hülse eine Dosierkammer 22 definiert ist.

Die Hülse 13 ist nach oben über eine Stange 5 mit einem aus dem Deckel 4 des Behälters herausragenden Knopf 1 verbunden.

Zunächst befinden sich die Öffnungen 9 der Hülse 13 innerhalb des Reservoirs 23 des Behälters, so dass die Dosierkammer 22 sich mit der Flüssigkeit aus dem Reservoir 23 füllen kann.

Durch Druck auf den Knopf 1 wird die Hülse 13 nach unten durch den Durchbruch 21 des Behälterbodens 14 herausgeschoben. Auf dem ersten Abschnitt ihres Wegs durchqueren die Öffnungen dabei einen Dichtabschnitt 24, in dem die Öffnungen 9 vollständig verschlossen sind. Es kann weder aus dem Reservoir 23 Flüssigkeit in die Dosierkammer 22 hinein noch Flüssigkeit aus der Dosierkammer 22 heraus laufen. Erst wenn die Öffnungen 9 der Hülse 13 nach unten aus dem Dichtabschnitt 24 heraustritt, werden die Öffnungen 9 wieder freigegeben und das Flüssigkeitsvolumen aus der Dosierkammer 22 kann herausfließen. Eine definierte Menge Flüssigkeit wird abgegeben.

Das Volumen der Dosierkammer 22 ist einstellbar, indem der Stempel 12 mit dem Knopf 1 über ein Gewinde 2 verbunden ist. Durch Drehen des Knopfes 1 wird das Gewinde verlängert oder verkürzt und der Stempel 12 damit in der Höhe verstellt. Je nach Position des Stempels 12 ist das Volumen der Dosierkammer 22 größer oder kleiner. Die vom Behälter bei einem Druck auf den Knopf 1 abgegebene Flüssigkeitmenge kann eingestellt werden.

Zur besseren Füllung und Entleerung der Dosierkammer 22 kann eine hier nicht dargestellte Öffnung im oberen Bereich der Dosierkammer vorgesehen sein, die durch einen Kanal in einem Bereich oberhalb des Flüssigkeitsspiegels des Reservoirs mündet. Beim Füllvorgang der Dosierkammer kann in der Dosierkammer vorhandene Luft durch die Öffnung und den Kanal entweichen, beim Entleeren der Dosierkammer kann Luft nachströmen, ohne dass Flüssigkeit aus dem Reservoir nachfließen kann.

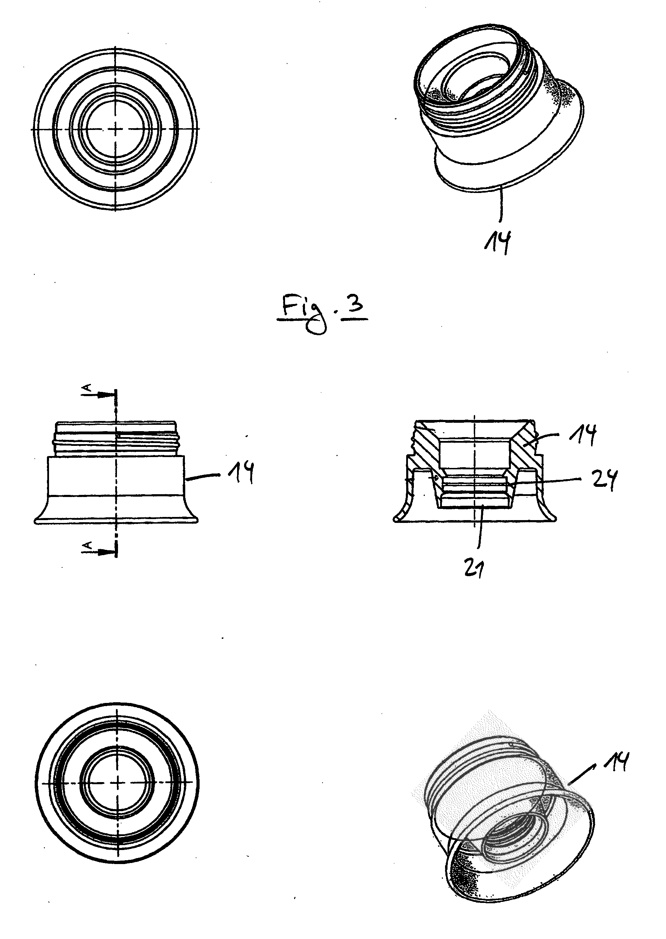

Fig. 3 zeigt den Boden 14 des Behälters aus den Figuren 1 und 2 in verschiedenen perspektivischen und Schnittdarstellungen. Dabei ist zu erkennen, dass der Boden 14 über einen Durchbruch 21 verfügt, in den die Dosiereinheit eingesetzt wird. Der Durchbruch wird dabei von einem Dichtabschnitt 24 begrenzt, der die Öffnungen der Dosierkammer beim Durchtritt durch den Durchbruch 21 vollständig verschließt.

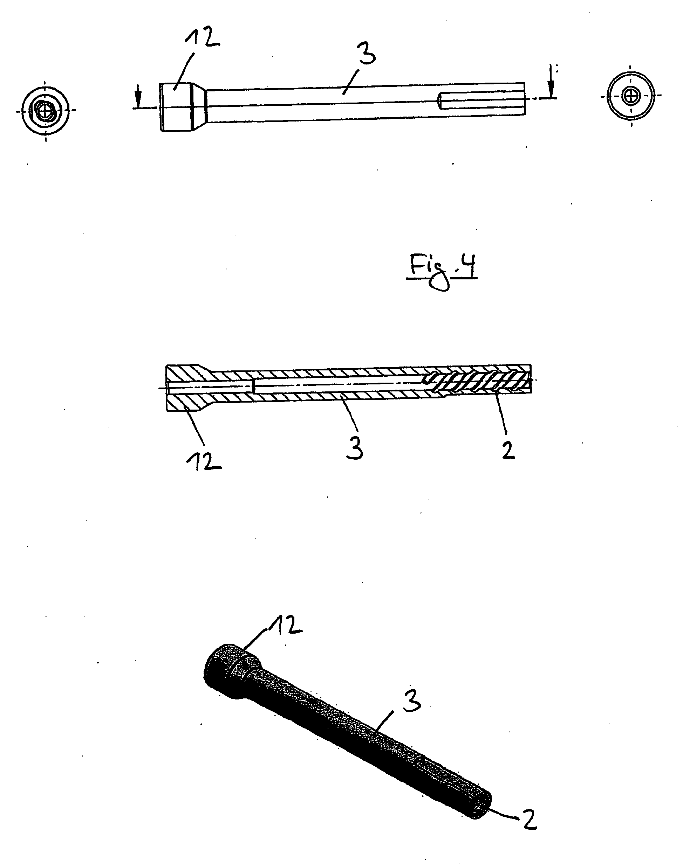

Fig. 4 zeigt den Stempel 12 des Behälters aus den Figuren 1 und 2 in verschiedenen perspektivischen und Schnittdarstellungen. Der eigentliche Stempel 12 ist dabei durch einen rohrförmigen Abschnitt 3 nach oben verlängert und weist am oberen Ende ein Innengewinde 2 auf, das zur Dosiseinstellung mit dem Betätigungsknopf verschraubt werden kann.

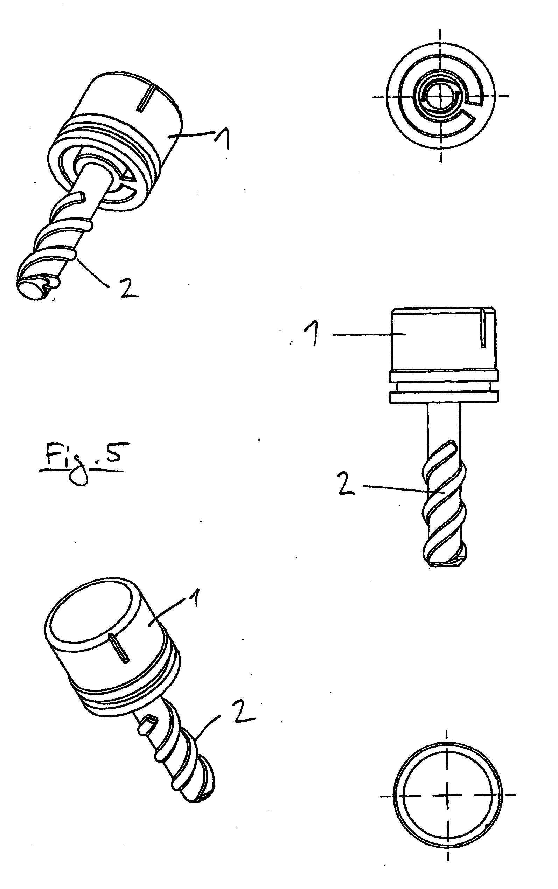

Fig. 5 zeigt den Knopf 1 des Behälters aus den Figuren 1 und 2 in verschiedenen perspektivischen und Schnittdarstellungen. Der aus dem Deckel des Behälters heraustretende Knopf 1 verfügt im unteren Teil über ein Außengewinde 2, das mit dem entsprechenden Innengewinde des Stempels zur Dosiseinstellung verschraubt werden kann.

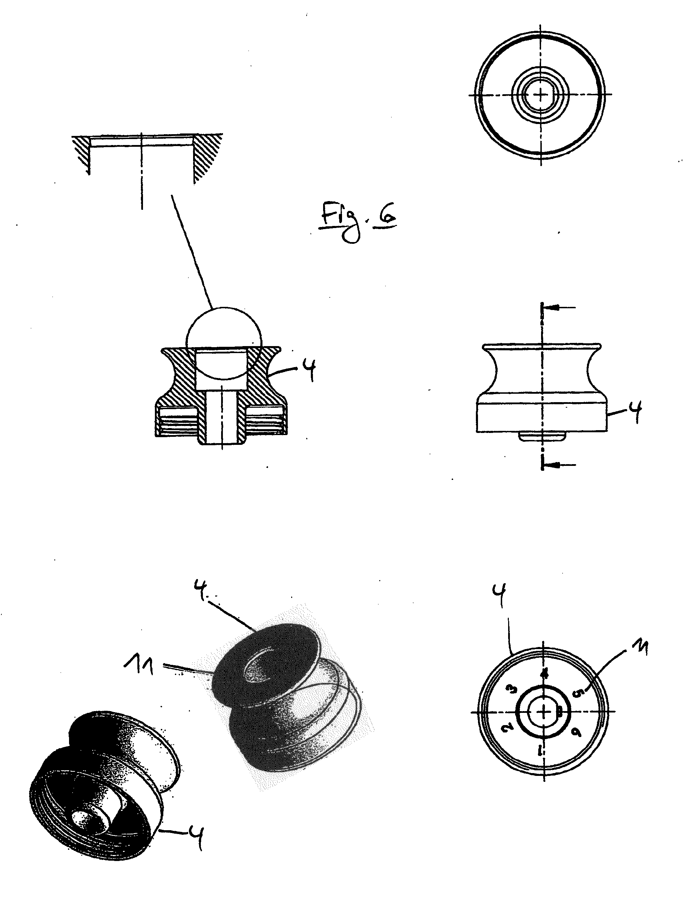

Fig. 6 zeigt den Deckel 4 des Behälters aus den Figuren 1 und 2 in verschiedenen perspektivischen und Schnittdarstellungen. Der Deckel 4 ist auf seiner Oberseite mit einer Skala 11 versehen, die einen Hinweis auf die durch Drehen am Knopf eingestellte Dosis gibt.

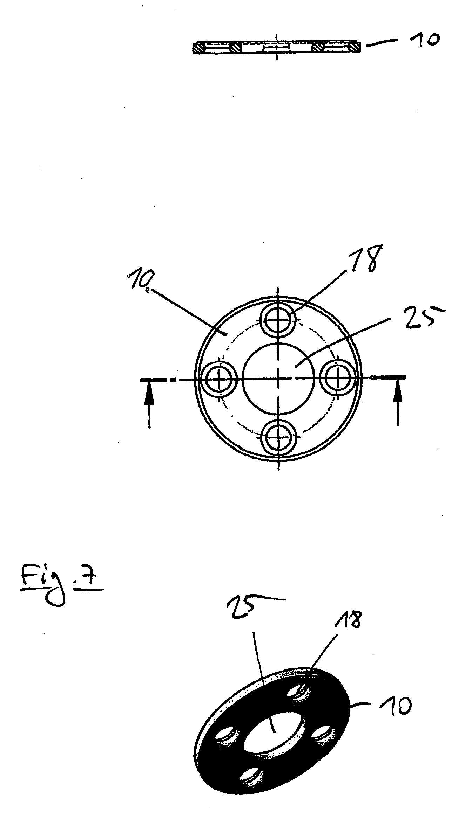

Fig. 7 zeigt den Zwischenboden 10 des Behälters aus den Figuren 1 und 2 in versc9hiedenen perspektivischen und Schnittdarstellungen. Der Zwischenboden 10 wird zwischen dem Gehäuse 7 des Behälters und seinem Bodenteil 14 eingelegt und verfügt über kleinere Öffnungen 18, die einen Flüssigkeitsdurchlass in den Bodenteil bilden. Die größere Öffnung 25 dient zur Aufnahme der Dosiereinheit.

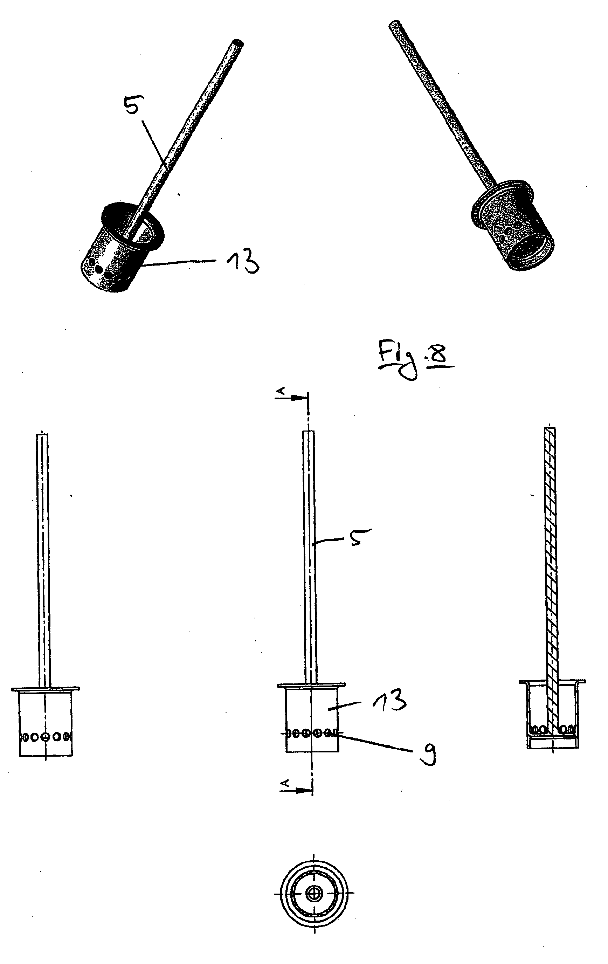

Fig. 8 zeigt die Hülse 13 des Behälters aus den Figuren 1 und 2 in verschiedenen perspektivischen und Schnittdarstellungen. Die Hülse 13 bildet zusammen mit dem Stempel die Dosierkammer. Die Hülse 13 ist nach oben durch die Stange 5 verlängert, die durch das rohrförmige Teil des Stempels nach oben zum Knopf hin verläuft und die Verschiebung der Hülse 13 bzw. der Dosierkammer erlaubt.

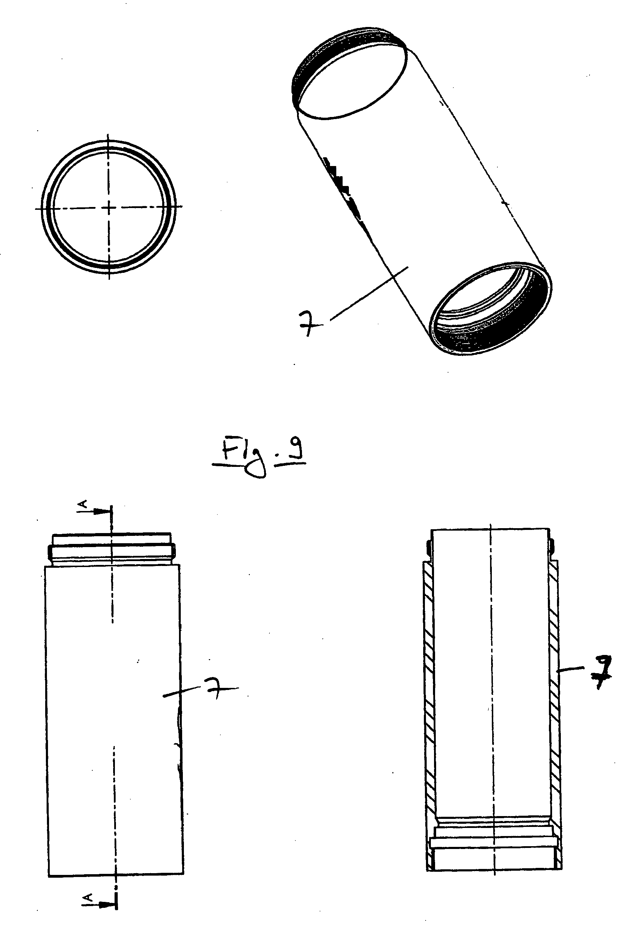

Fig. 9 zeigt das Gehäuse 7 des Behälters aus den Figuren 1 und 2 in verschiedenen perspektivischen und Schnittdarstellungen. Das Gehäuse wird nach oben vom mit dem Gehäuse verschraubten Deckel und nach unten vom mit dem Gehäuse verschraubten Boden abgeschlossen, so dass sich ein abgeschlossenes Reservoir bildet.

Im Folgenden wird ein weiteres Beispiel eines erfindungsgemäßen Behälters beschrieben:

Die Neuerung bezieht sich auf mechanische Spender zur Aufnahme von Milch mit portionsweiser Abgabe, die sich auch in dem Volumen der Milchabgabe mechanisch variabel bestimmen lassen.

Die Spender können in verschiedenen Größen, Formen und Materialien jeglicher Art wie z.B. Edelmetall, Kunststoff, Keramik, Glas, Holz etc. hergestellt werden.

Durch das Gewinde 2 wird der Deckel 4 geöffnet, und der Behälter 7 kann gefüllt werden.

Durch Drehen des mit Knopfes 1, bewegt sich die Stange 5 und der Stempel 12 nach unten, so dass die mit Kammer 6 zur Aufnahme von Milch in der Größe variabel eingestellt wird. Dieses lässt sich auch durch die Zahlenfolge 11 ablesen.

Durch die Druckbetätigung des Knopfes 1 werden die mit 5, 3, 15, 16 und 12 gekennzeichneten Teile aus der Hülse 13 zur Aufnahme von der Druckfeder 15 so weit nach aussen gedrückt, das die Löcher 9 zum Austritt der Milch freigesetzt werden, so dass die Milch variabel aus dem Spender 17 entweichen kann.

Der mechanische Behälter zum Befüllen von Milch mit einer variabel einstellbaren und portiosweisen Abgabe verfügt über einen Mechanismus, der sich im inneren Teil der Hülse 7 befindet.

Der mechanische Behälter 7 zum Befüllen von Milch kann dadurch gefüllt werden, dass der Deckel 4 durch das Gewinde 2 geöffnet wird und der Behälter gefüllt wird.

## Patentansprüche

1. Behälter (17) zur Befüllung mit und zur portionsweisen Abgabe von einer Flüssigkeit,
umfassend ein Reservoir (23) und eine Dosiereinheit (12, 13), die eine Dosierkammer (22) mit Öffnungen (9) aufweist,
**dadurch gekennzeichnet, dass**
die Dosierkammer (22) verschiebbar zwischen einer ersten und einer zweiten Position in einer Wand des Reservoirs (23) angeordnet ist,
wobei in der ersten Position die Dosierkammer (22) über die Öffnungen (9) in Flüssigkeitskommunikation mit dem Reservoir (23) steht
und in der zweiten Position die Dosierkammer (22) über die Öffnungen (9) in Flüssigkeitskommunikation mit der Umgebung steht
und die Öffnungen (9) auf dem Verschiebeweg zwischen der ersten und der zweiten Position in zumindest einem Abschnitt (24) vollständig verschlossen sind.

2. Behälter (17) nach Anspruch 1, **dadurch gekennzeichnet, dass** die Dosierkammer (22) im Boden (14) des Reservoirs (23) angeordnet ist.

3. Behälter (17) nach Anspruch 1 oder 2, **dadurch gekennzeichnet, dass** das Volumen der Dosierkammer (22) verstellbar ist, insbesondere durch einen in der Höhe verstellbaren Stempel (12).

4. Behälter (17) nach einem der Ansprüche 1 bis 3, **dadurch gekennzeichnet, dass** die Dosierkammer (22) durch Federkraft (15) in der ersten Position gehalten ist.

5. Behälter (17) nach einem der Ansprüche 1 bis 4, **dadurch gekennzeichnet, dass** die Dosierkammer (22) durch Druck auf einen Druckknopf (1) verschiebbar ist.

6. Behälter (17) nach einem der Ansprüche 1 bis 5, **dadurch gekennzeichnet, dass** das Volumen der Dosierkammer (22) durch Drehen eines Knopfes (1) einstellbar ist, insbesondere durch Drehen des Druckknopfes.

7. Behälter (17) nach Anspruch 6, **dadurch gekennzeichnet, dass** der Stempel (12) mit dem Druckknopf (1) durch ein Gewinde (2) verbunden ist.

8. Behälter (17) nach einem der Ansprüche 1 bis 7, **dadurch gekennzeichnet, dass** die Dosierkammer (22) in einem vom Reservoir (23) abnehmbaren Gehäuseteil (14) des Behälters (17) angeordnet ist.

9. Behälter (17) nach einem der Ansprüche 1 bis 8, **dadurch gekennzeichnet, dass** die Öffnungen (9) der Dosierkammer (22) rund, oval oder schlitzförmig sind.

10. Behälter (17) nach einem der Ansprüche 1 bis 9, **dadurch gekennzeichnet, dass** der Behälter (17) zumindest teilweise aus wärmedämmendem Material besteht.
